# EUROPEAN PATENT APPLICATION

(11) **EP 0 687 547 A2**
(43) Date of publication of application: **20.12.1995**
(21) Application number: 95108980.4
(22) Date of filing: 09.06.1995
(51) Int. Cl.: B29C 65/00, F01P 11/02

(54) **Container**

(30) Priority: 14.06.1994 JP 131998/94
(71) Applicant: NIPPONDENSO CO., LTD., Kariya-city Aichi-pref., 448 (JP)
(72) Inventor: Mishima, Youji, Kariya-city, Aichi-pref., 448 (JP); Sakane, Takaaki, Nagoya-city, Aichi-pref., 465 (JP); Kato, Akitada, Kariya-city, Aichi-pref., 448 (JP); Ota, Yoshihiko, Daiichichiryu-shataku, Chiryu-city, Aichi-pref., 472 (JP)
(74) Representative: Klingseisen, Franz, Dipl.-Ing.

(57) **Abstract**

To prevent drop of a burr (6) produced by heat welding in a nylon reserve tank formed by heat welding an upper tank (4) and a lower tank (5), on inner circumferences of each of welding portions (40) and (50) disposed on the upper tank (4) and the lower tank (5), a burr holding chamber (43, 53) receiving and holding the burr (6) produced on a periphery of a welding surface (Y) of each of the welding portions (40) and (50) by heat welding is formed. The burr holding chamber (43, 53) includes a concave portion (43) formed on an inner circumference of the welding portion (40) by enlarging an opening side inner circumference of the upper tank (4) and a groove (53) formed by remaining an inner circumference wall (52) at the inner circumference of the welding portion (50) of the lower tank (5). A tip of the inner circumference wall (52) projects more than the opening surface of the lower tank (5), and when the upper tank (4) and the lower tank (5) are combined, the inner circumference wall (52) has a length to reach inside of the concave portion (43) of the upper tank (4).

## Description

### CROSS REFERENCE TO RELATED APPLICATION

This application is based on and claims priority of Japanese Patent Application No. 6-131998 filed June 14, 1994, the content of which is incorporated herein by reference.

### BACKGROUND OF THE INVENTION

### 1. Field of the Invention:

The present invention relates to a container formed by heat welding a first container and a second half container.

### 2. Related Art:

In a container formed by heat welding the first container and the second half container, for example, a closed type reserve tank for vehicles disposed in a cooling water circuit of a water cooling type internal combustion engine. The reserve tank is formed by connecting an upper tank and a lower tank made of polypropylene type resin material being easily heat welded by contact type welding such as a heat plate, vibration or the like or non-contact type welding like a heat radiation.

However, in the polypropylene type resin material, since cap function declines by deforming an assembly portion of a press cap due to a lack of a creep intensity, a metallic water filling opening is assembled to the tank by crimping the tank. Further, as in the same manner, in order to compensate for a lack of intensity of an inlet pipe and an outlet pipe, metallic pipe need to be assembled by press fitted. Therefore, the reserve tank made of polypropylene type resin material needs an extremely high cost. Moreover, in order to obtain a pressure-resistance, a polypropylene tank needs to be divided its inside into small partitions and therefore, cost for making forms rises.

In resin material used in a reserve tank placed in the same use environment as a radiator, nylon material having good heat resistance and high creep intensity is preferably used.

However, since nylon reserve tank cannot be blow molded, in general, an upper tank and a lower tank are formed separately and each contact surface is heat welded so as to be united integrally. However, since burrs are produced by heat welding, when the burrs fall into the tank, an exist pipe clogs or the burrs can flow out toward an engine. That is, nylon makes burrs drop easer than polypropylene does, and therefore, a burr drop prevention is necessary (although polypropylene also produces burrs, they are hard to drop).

### SUMMARY OF THE INVENTION

It is an object of the present invention to prevent burrs in a container produced by heat welding from dropping inside thereof when the container is formed by heat welding a first half container and a second half container.

According to one preferred mode of the present invention, in a container formed by heat welding the first container and the second half container made of heat plasticity resin, a burr holding chamber receiving and holding burrs produced by the heat welding is formed in an inner circumference side of a welding surface of the first half container and the second half container.

The burr holding chamber is elongated from the inner circumference surface of the first half container, formed with a specified space in the inner circumference side of the welding surface and formed by a burr drop prevention wall reaching toward the second half container.

Further, the burr holding chamber is elongated from each of the inner circumference surface of the first half container and the inner circumference surface of the second half container and formed by the burr drop prevention wall forming a specified space in the inner circumference side of the welding surface.

The burr holding chamber is formed as a generally sealed-up space.

An outer circumference wall covering an outer circumference of the welding surface along the welding surface in an outside of the container.

In another preferred mode of the present invention, the outer circumference wall is elongated from an outer circumference of the first half container, covers the outer circumference of the welding surface and opens in a side of the second half container.

In still another preferred mode of the present invention, a second outer circumference wall elongated against the outer circumference wall is installed integrally with the first half container and the second half container in the inner circumference side or in the outer circumference side of the outer circumference wall.

In the container of the present invention described above, although burrs produced by heat welding the first half container and the second half container, the burrs are received and held in the burr holding chamber formed in the inner circumference side of the welding surface so that the burrs can be prevented from dropping in the container.

The burr holding chamber is elongated from the inner circumference surface of the first half container and can be formed by the burr drop prevention wall reaching toward the second half container forming a specified space in the inner circumference side of the welding surface. Further, the burr holding chamber is elongated from the inner circumference surface of the second half container and can be formed by the burr drop prevention wall reaching toward the first half container forming a specified space in the inner circumference side of the welding surface. Or the burr holding chamber is elongated separately from the inner circumference surfaces of the first half container and the second half container and is formed by the burr drop prevention wall forming a specified space in the inner circumference side of the welding surface.

The burr holding chamber is formed as a generally sealed-up space by the burr drop prevention wall so that burrs produced by the heat welding can be received and held assuredly in the burr holding chamber.

Moreover, in the outside of the container, by installing the outer circumference wall covering the outer circumference of the welding surface along the welding surface, burrs produced in the outer circumference side of the welding surface can be hid by the outer circumference wall so that the exterior of the container can be looked good.

Furthermore, in the inner circumference side or the outer circumference side of the outer circumference wall, since the second outer circumference wall is elongated against the outer circumference wall, burrs are received by the outer circumference wall or the second outer circumference wall even though burrs produced in the outer circumference side of the welding surface drop, and therefore, burrs can be prevented from dropping.

### BRIEF DESCRIPTION OF THE DRAWINGS

In the accompanying drawings:
Fig. 1 is a partially sectional view illustrating a welding portion of a reserve tank of a first embodiment in the present invention;
Fig. 2 is a partially sectional view illustrating the welding portion of the reserve tank of the first embodiment;
Fig. 3 is a sectional view illustrating the reserve tank of the first embodiment;
Fig. 4 is a schematic view illustrating a cooling water circuit of a water cooling type engine at which the reserve tank is disposed;
Fig. 5 is a partially sectional view illustrating a welding portion of a reserve tank of a second embodiment;
Fig. 6 is a partially sectional view illustrating a reserve tank of a third embodiment;
Fig. 7 is a partially sectional view illustrating the reserve tank of the third embodiment;
Fig. 8 is a partially sectional view illustrating a reserve tank of a fourth embodiment;
Fig. 9 is a partially sectional view illustrating a reserve tank of a fifth embodiment; and
Fig. 10 is a partially sectional view illustrating a reserve tank of a sixth embodiment.

### DETAILED DESCRIPTION OF THE PREFERRED EMBODIMENTS

The present invention will be described in detail with reference to the accompanying drawings.

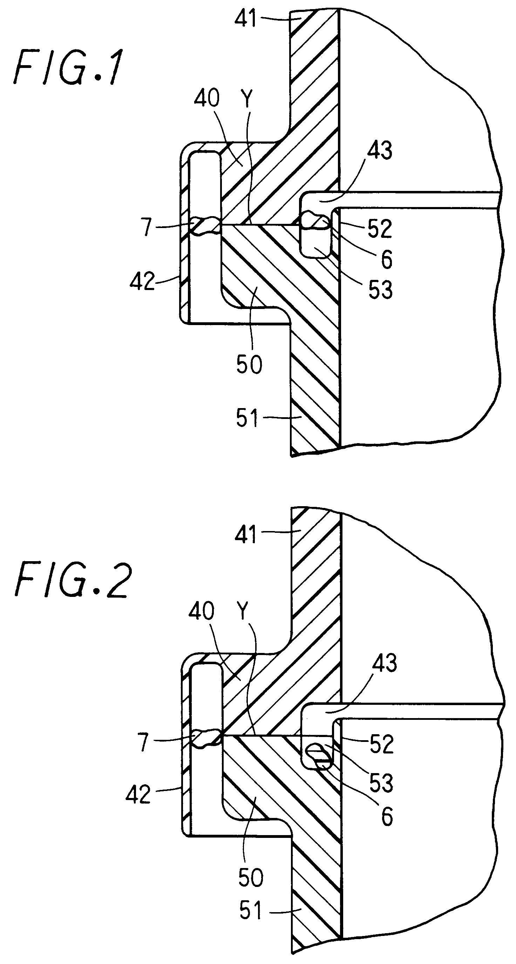

A complete closed type reserve tank (hereinafter described as reserve tank for short) of a first embodiment applied for a container in the present invention will be explained with reference to Figs. 1 through 4.

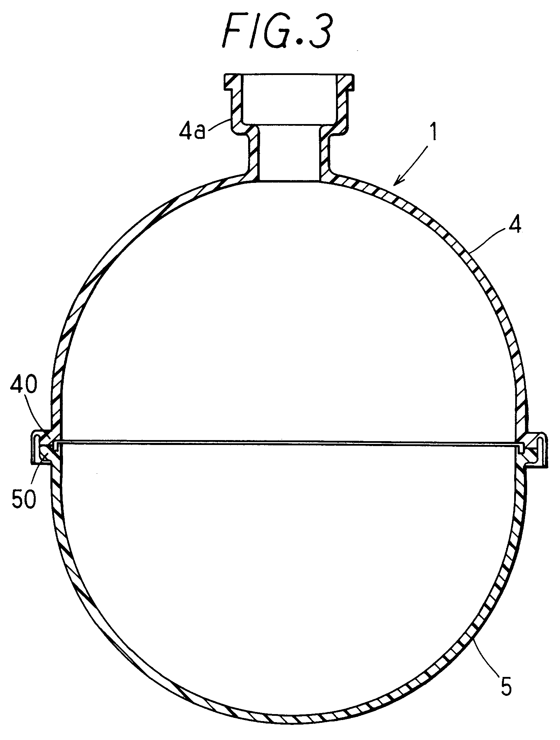

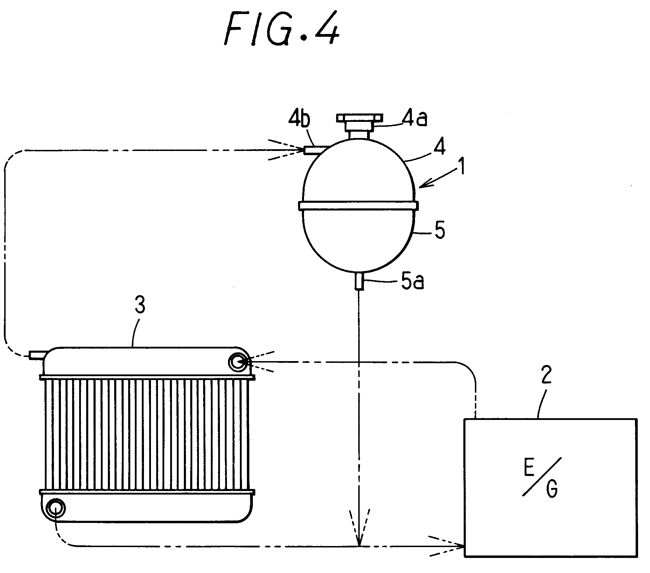

As shown in Fig. 4, a reserve tank 1 is disposed in a cooling water circuit connecting a water cooling type engine 2 and a radiator 3. The reserve tank 1 includes an upper tank 4 (the first half container of the present invention) made of nylon material having good heat resistance and a lower rank 5 (the second half container of the present invention), and therefore, as shown in Fig. 3, the reserve tank 1 is united integrally by connecting each of the tanks 4 and 5 by heat welding (for example, spin welding having excellent welding intensity).

In the upper rank 4, a filling opening 4a (see Fig. 3) for pouring cooling water in and an inlet pipe 4b (see Fig. 4) in which cooling water flows are formed integrally, and a welding portion 40 which the upper tank 4 and the lower tank 5 are welded is arranged on a periphery of an opening end portion of the upper tank 4.

In the lower tank 5, an outlet pipe 5a which cooling water flows out is disposed integrally, and a welding portion 50 which is welded with the upper tank 4 is disposed on the periphery of an opening end portion. The upper tank 4 and the lower tank 5 are made into hemisphere shapes and facing and connecting each other's opening end portions so that the reserve tank 1 is formed into generally spherical shape (ellipse) as shown in Fig. 3.

As shown in Fig. 1, the welding portion 40 of the upper tank 4 projects with a flange shape toward an outer circumference from a tank circumference wall 41. In an outer circumference surface of the welding portion 40, an outer circumference wall 42 is formed so as to cover the outer circumference of the welding portion 40 by maintaining fixed interval relative to the outer circumference surface of the welding portion 40. The outer circumference wall 42 is elongated toward the opening end side from the outer circumference surface of the welding surface and is set to a length enough to cover the whole outer circumference of the welding portion 50 of the lower tank 5.

As shown in Fig. 1, the welding portion 50 of the lower tank 5 projects radially with a flange shape toward an outer circumference from a tank circumference wall 51 so as to be consistent with the welding portion 40 of the upper tank 4. In an inner circumference of the welding portions 40 and 50 of the upper tank 4 and the lower tank 5 respectively, a burr holding chamber (described later) receiving and holding a burr 6 arranged on a periphery of a welding surface Y of each of the welding portions 40 and 50 is formed across the whole circumference by heat welding.

The burr holding chamber includes a concave portion 43 formed in the inner circumference of the welding portion 40 by which the inner circumference in the opening side of the upper tank 4 is enlarged and a groove 53 formed in a condition an inner circumference wall 52 remains in the inner circumference of the welding portion 50 of the lower tank 5. A tip end of the inner circumference wall 52 projects more than the opening portion of the lower tank 5, and when the lower tank 5 contacts the upper tank 4, the inner circumference wall 52 has a length enough to reach inside of the concave portion 43 of the upper tank 4 (see Fig. 1).

Next, an operation of the embodiment in the present invention is explained.

The upper tank 4 and the lower tank 5 contact each other by facing each opening end thereof and form the reserve tank 1 by being united integrally with being heat welded at the welding portions 40 and 50 of the upper tank 4 and the lower tank 5 respectively (see Fig. 3).

As shown in Fig. 1, by heat welding, burrs 6 and 7 are produced on the periphery of the welding surface Y of each of the welding portions 40 and 50. However, since the burr 6 produced on a periphery of the welding surface Y inside of the reserve tank 1 is received in the burr holding chamber (the concave portion 43 and the groove 53) formed in the inner circumference of each of the welding portions 40 and 50, as shown in Fig. 2, even though the burr 6 drops from the periphery of the welding surface Y, the burr 6 is held in the burr holding chamber (the groove 53).

In the burr holding chamber, since a tank inner portion side of the groove 53 forming a lower side of the burr holding chamber is surrounded by the inner circumference wall 52, the burr 6 dropping to the groove 53 does not drop to the inside of the reserve tank 1 by getting over the inner circumference wall 52 so that the burr 6 can be held assuredly. Therefore, the burr 6 produced by heat welding does not clog the outlet pipe 5a by falling down and does not disturb an engine 2 by flowing out toward the engine 2 from the outlet pipe 5a.

In the burr 7 produced on the periphery of the welding surface Y outside the reserve tank 1, the outer circumference surface of the welding portion 40 of the upper tank 4 and the welding portion 50 of the lower tank 5 are covered by the outer circumference wall 42 formed integrally with the welding portion 40 of the upper tank 4, and therefore, an existence of the burr 7 can be hid by the outer circumference wall 42 so that an appearance of the reserve tank 1 can be improved.

In the embodiment of the present invention, since drop of the burr 6 produced by heat welding in the tank inside portion, as mentioned above, the reserve tank 1 is formed by heat welding the upper tank 4 and the lower 5 made of nylon having good heat-resistance. As a result, conventionally, comparing to a case which the upper tank 4 and the lower tank 5 are made of polypropylene resin material, not only a metallic filling opening and a metallic pipe for reinforcing are unnecessary but also cost for shaping and forming the tank is reduced, and therefore, total cost can be reduced largely.

Further, in the reserve tank 1 of the embodiment, since the opening shape of the upper tank 4 and the lower tank 5 is an ellipse shape, spin welding having excellent welding intensity can be carried out. Moreover, the whole shape of the reserve tank 1 is made into a generally spherical shape so as to obtain enough pressure resistance intensity.

Next, a second embodiment of the present invention is explained.

In the embodiment, in the inside of the outer circumference wall 42 formed at the welding portion 40 of the upper tank 4, the second outer circumference wall 54 is formed from the welding portion 50 by facing the outer circumference wall 42. The second outer circumference wall 54 is formed integrally with the welding portion 50 of the lower tank 5 and extended more upward in the figure than the outer circumference surface of the welding portion 50 of the lower tank 5.

Thus, even though the burr 7 produced on the periphery of the welding surface Y in the outside of the reserve tank 1 drops, the burr 7 can be received by the second outer circumference wall 54. Therefore, the construction of the embodiment can be applied for a case to require drop prevention of the burr 7 in the outside of the reserve tank 1. In that case, the second outer circumference wall 54 can be formed in the outside of the outer circumference wall 42 formed at the welding portion 40 of the upper tank 4.

Next, a third embodiment of the present invention is explained.

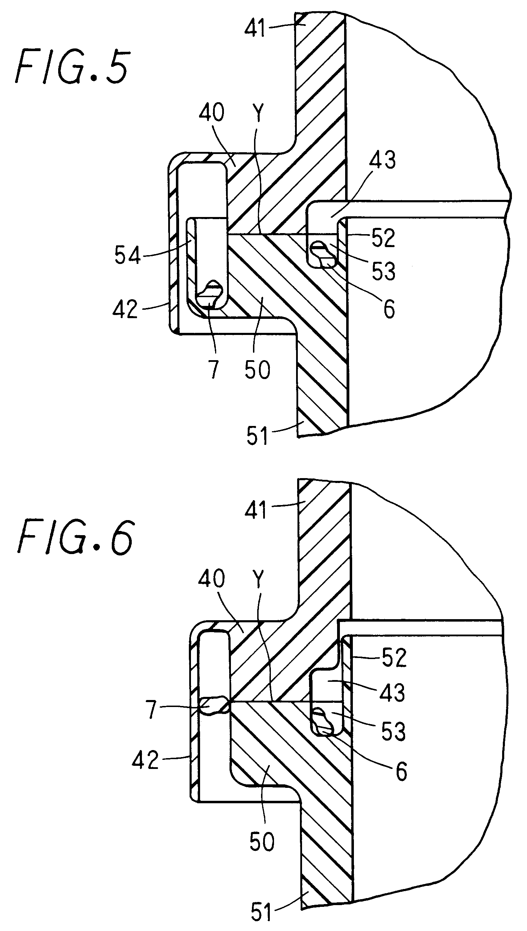

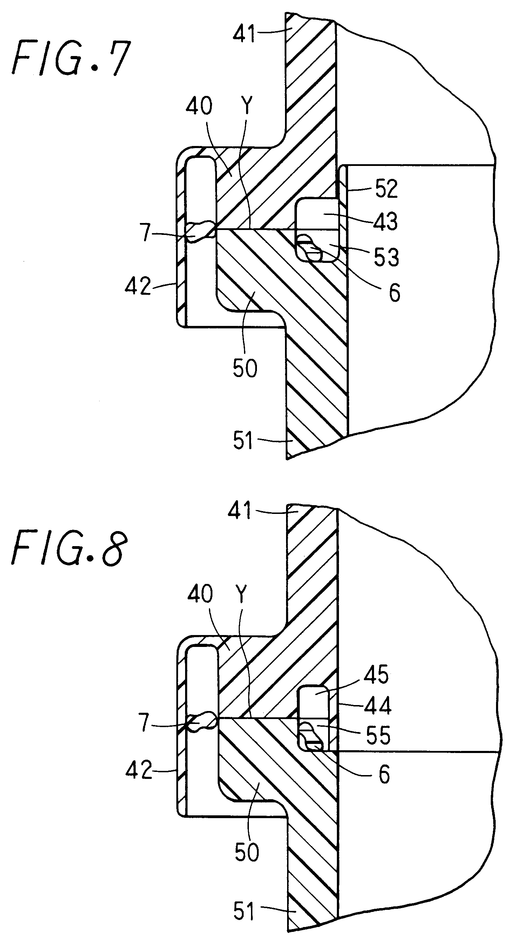

In the embodiment, as shown in Figs. 6 and 7, the inner circumference wall 52 forming the tank inner portion side of the groove 53 installed at the lower tank 5 is extended more, and the inner circumference wall 52 contacts or becomes close to the inner circumference surface of the upper tank 4 so that the tank inner portion side of the concave portion 43 installed at the upper tank 4 is closed. Therefore, since the burr holding chamber (the concave portion 43 and the groove 53) becomes a closed space, the burr 6 dropping from the periphery of the welding surface Y does not fall down to the inner portion of the reserve tank 1 by coming out from the burr holding chamber, and therefore, the burr 6 can be held in the burr holding chamber.

Next, a fourth embodiment of the present invention is explained.

In the embodiment, a groove 45 is formed in a condition which a inner circumference wall 44 remains at the inner circumference of the welding portion 40 of the upper tank 4 and a concave portion 55 is formed at the inner circumference of the welding portion 50 of the lower tank 5, and therefore, a burr holding chamber (the groove 45 and the concave portion 55) is formed. However, in that case, a tank inner portion side of the concave portion 55 is preferably closed by the inner circumference wall 44 or a clearance between the inner circumference wall 44 and the tank inner portion side of the concave portion 55 can be made that the burr 6 cannot pass through between the tip end of the inner circumference wall 44 and the concave portion 55.

Next, a fifth embodiment of the present invention is explained.

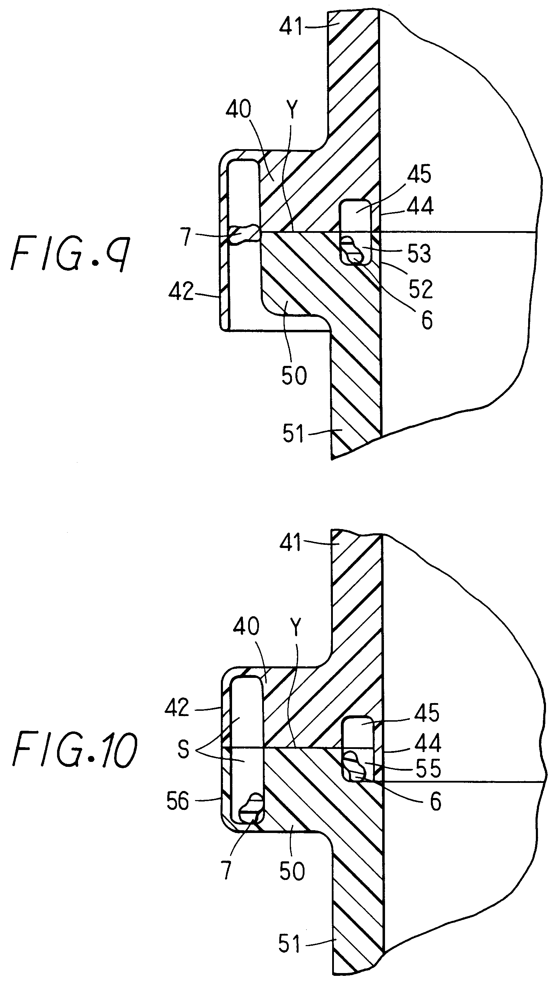

In the embodiment, the grooves 45 and 53 having the inner circumference walls 44 and 52 are formed on the upper tank 4 and the lower tank 5 respectively, as shown in Fig. 9, by contacting tips of the inner circumference walls 44 and 52, the closed burr holding chamber (the grooves 45 and 53) are formed.

Next, a sixth embodiment of the present invention is explained.

In the embodiment, the outer circumference wall 42 and the outer circumference wall 56 opposing thereof installed on the welding portion 50 of the lower tank 5 and on welding portion 40 of the upper tank 4 respectively are formed integrally, as shown in Fig. 10, by contacting tips of the outer circumference walls 42 and 56, a closed burr holding chamber S is formed in the outside of the reserve tank 1.

In the embodiment, although the reserve tank 1 is explained as an example of a container, without limiting the reserve tank 1, the other container in which burrs cannot be allowed can be used. Further, method for heat welding is not limited to only, the spin welding.

Moreover, although resin material used in the reserve tank 1 nylon material mentioned in the embodiments is the best, any heat plasticity resin other than the nylon material can be used therein.

Furthermore, the reserve tank 1 of the embodiment, although the upper tank 4 and the lower tank 5 are combined in an up-and-down direction and heat welded, the first half container and the second half container can be combined in a left-and right direction and heat welded.

## Claims

1. A container comprising:
a first half container (4) and a second half container (5) both made of heat plasticity resin, said first half container (4) and said second half container (5) combined by heat welding; and
a burr holding chamber (43, 45, 53, 55, S) disposed in an inner circumference side of said welding surface of said first half container (4) and said second half container (5) to receive and hold burrs (6, 7) produced by said heat welding along its welding surface.

2. The container according to claim 1, wherein said burr holding chamber (43, 45, 53, 55, S) is formed by a burr drop prevention wall (44, 52) forming a specified space in the inner circumference side of said welding surface and reaching a side of said second half container (5) and said burr drop prevention wall (44, 52) is elongated from an inner circumference surface of said fist half container (4).

3. The container according to claim 2, wherein said burr holding chamber (43, 45, 53, 55, S) is formed as a generally closed space.

4. The container according to claim 1, wherein said burr holding chamber (43, 45, 53, 55, S) is formed by a burr drop prevention wall (44, 52) forming a specified space in the inner circumference side of said welding surface and reaching a side of said first half container (4) and said burr drop prevention wall (44, 52) is elongated from an inner circumference surface of said second half container (5).

5. The container according to claim 4, wherein the burr holding chamber (43, 45, 53, 55, S) is formed as a generally closed space.

6. The container according to claim 1, wherein said burr holding chamber (43, 45, 53, 55, S) is formed by said burr drop prevention wall (44, 52) forming a specified space in the inner circumference side of said welding surface and said burr drop prevention wall (44, 52) is elongated from each inner circumference surface of said first and second half containers (4, 5).

7. The container according to claim 6, wherein said burr holding chamber (45, 53) is formed as a generally closed space.

8. The container according to claim 1, wherein said burr holding chamber (45, 53) is formed as a generally closed space.

9. The container according to claim 1, comprising an outer circumference wall (42, 56) covering an outer circumference of said welding surface, wherein said outer circumference wall (42, 56) is made integrally with said first half container (4) or said second half container (5) along said welding surface outside of said container.

10. The container according to claim 9, wherein said outer circumference wall (42, 56) covers said outer circumference of said welding surface by elongated from said outer circumference surface of said first half container (4) and opens in a side of said second half container (5).

11. The container according to claim 10, comprising a second outer circumference wall (42, 54, 56) elongated by facing said outer circumference wall (42, 54, 56) in an inner circumference side or in an outer circumference side of said outer circumference wall (42, 54, 56), wherein said outer circumference wall (42, 54, 56) is made integrally with one of said first half container (4) and said second half container (5).

12. The container according to claim 9, wherein said outer circumference wall (42, 54) covers said outer circumference of said welding surface by elongated from said outer circumference surface of said second half container (5) and opens in a side of said second half container (5).

13. The container according to claim 12, comprising a second outer circumference wall (42, 54, 56) elongated by facing said outer circumference wall (42, 54, 56) in an inner circumference side or in an outer circumference side of said outer circumference wall (42, 54, 56), wherein said outer circumference wall (42, 54, 56) is made integrally with one of said first half container (4) and said second half container (5).

14. The container according to claim 9, comprising a second outer circumference wall (42, 54, 56) elongated by facing said outer circumference wall (42, 54, 56) in an inner circumference side or in an outer circumference side of said outer circumference wall (42, 54, 56), wherein said outer circumference wall (42, 54, 56) is made integrally with one of said first half container (4) and said second half container (5).

15. The container according to claim 1, wherein said outer circumference of said welding surface is covered by an outer circumference wall (42, 56) elongated from each of said first and second half containers (4, 5) along said welding surface outside of said container.

16. The container according to claim 1, wherein said container can be used as a reserve tank (1) for an automotive engine cooling device having an engine (2) and a radiator (3) so that said reserve tank (1) reserves excess cooling water from said radiator (3).

17. The container according to claim 16, wherein said radiator (3) has an inlet tank and an outlet tank, said inlet tank is connected to said engine with a cooling water passage to receive cooling water therefrom and said outlet tank is connected to said engine (2) with a return cooling water passage to discharge cooling water thereto, said reserve tank (1) has an inlet and an outlet, said inlet is connected to said inlet tank with another cooling water passage to receive excess water therefrom and said outlet is connected to said return cooling water passage to discharge cooling water to said engine (2).
